(19) **Europäisches Patentamt / European Patent Office / Office européen des brevets**

(11) **EP 3 016 314 B1**

(12) **EUROPEAN PATENT SPECIFICATION**

(45) Date of publication and mention
of the grant of the patent:
**09.11.2016 Bulletin 2016/45**

(51) Int Cl.:
*H04L 9/00* (2006.01)
*H04L 9/32* (2006.01)
*G06F 21/32* (2013.01)
*G10L 17/12* (2013.01)

(21) Application number: **14461584.6**

(22) Date of filing: **28.10.2014**

(54) **A system and a method for detecting recorded biometric information**

System und Verfahren zur Erkennung aufgezeichneter biometrischer Informationen

Système et procédé pour détecter des informations biométriques enregistrées

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2016 Bulletin 2016/18**

(73) Proprietor: **Akademia Gorniczo-Hutnicza im.
Stanislawa
Staszica w Krakowie
30-059 Krakow (PL)**

(72) Inventors:
• **Galka, Jakub
31-621 Krakow (PL)**
• **Grzywacz, Marcin
43-602 Jaworzno (PL)**
• **Samborski, Rafal
31-303 Krakow (PL)**

(74) Representative: **Eupatent.pl
ul. Zeligowskiego 3/5
90-752 Lodz (PL)**

(56) References cited:
**EP-A1- 2 192 576     US-A- 6 084 977**

• JAKUB GALKA ET AL: "Playback attack detection for text-dependent speaker verification over telephone channels", SPEECH COMMUNICATION, vol. 67, 1 March 2015 (2015-03-01), pages 143-153, XP055182502, ISSN: 0167-6393, DOI: 10.1016/j.specom.2014.12.003

• WEI SHANG ET AL: "A playback attack detector for speaker verification systems", COMMUNICATIONS, CONTROL AND SIGNAL PROCESSING, 2008. ISCCSP 2008. 3RD INTERNATIONAL SYMPOSIUM ON, IEEE, PISCATAWAY, NJ, USA, 12 March 2008 (2008-03-12), pages 1144-1149, XP031269241, ISBN: 978-1-4244-1687-5

• ZHI-FENG WANG ET AL: "Channel pattern noise based playback attack detection algorithm for speaker recognition", MACHINE LEARNING AND CYBERNETICS (ICMLC), 2011 INTERNATIONAL CONFERENCE ON, IEEE, 10 July 2011 (2011-07-10), pages 1708-1713, XP031966488, DOI: 10.1109/ICMLC.2011.6016982 ISBN: 978-1-4577-0305-8

• WU ZHIZHENG ET AL: "Synthetic speech detection using temporal modulation feature", 2013 IEEE INTERNATIONAL CONFERENCE ON ACOUSTICS, SPEECH AND SIGNAL PROCESSING (ICASSP); VANCOUCER, BC; 26-31 MAY 2013, INSTITUTE OF ELECTRICAL AND ELECTRONICS ENGINEERS, PISCATAWAY, NJ, US, 26 May 2013 (2013-05-26), pages 7234-7238, XP032508956, ISSN: 1520-6149, DOI: 10.1109/ICASSP.2013.6639067 [retrieved on 2013-10-18]

• CORREIA M J ET AL: "Preventing converted speech spoofing attacks in speaker verification", 2014 37TH INTERNATIONAL CONVENTION ON INFORMATION AND COMMUNICATION TECHNOLOGY, ELECTRONICS AND MICROELECTRONICS (MIPRO), MIPRO, 26 May 2014 (2014-05-26), pages 1320-1325, XP032622913, DOI: 10.1109/MIPRO.2014.6859772 [retrieved on 2014-07-17]

EP 3 016 314 B1

**Description**

TECHNICAL FIELD

There are presented herein a system and a method for detecting recorded biometric information, which are useful in particular for detection of playback attack.

BACKGROUND

A playback attack (also known as a replay attack) is commonly defined as a form of a network attack, in which a valid data transmission is maliciously or fraudulently repeated or delayed. One of the biggest threats in biometric speaker verification systems are playback (replay) attacks, in which a previously recorded passphrase is played back by an unprivileged person in order to gain access.

There is a known concept of biometric speaker verification, the aim of which is to accept or reject the identity of the speaker based on the sample of their voice. Telephone-based automatic speaker verification by use of telephone channel has been evaluated. Despite the fact that such systems perform very well, consumers and organizations still have their doubts when it comes to high-security applications (e.g. e-banking). One of the prevailing arguments against voice biometry concerns the common passphrase text-dependent systems, in which the passphrase uttered by the speaker does not change from one login attempt to another login attempt.

In such cases it could be possible to break into such systems by playing-back a recording, which was obtained earlier using a microphone or any other eavesdropping method (e.g. malicious mobile software). This type of attack is called a playback attack and can be relatively easily performed by a person experienced with signal processing.

One of the solutions to this problem is to use a text-prompted system (in which the user is asked to say a randomly selected phrase for each access attempt), although such systems are more sensitive to other types of attacks (such as concatenation of previously recorded sounds) and, due to the fact that the system cannot use lexical knowledge in its assessment, achieve higher error rates as compared to text-dependent solutions.

A publication "A Playback Attack Detector for Speaker Verification Systems" by Wei Shang and Maryhelen Stevenson of Department of Electrical and Computer Engineering University of New Brunswick (ISCCSP 2008, Malta, 12-14 March 2008) discloses a playback attack detector (PAD), which can be mobilized in guarding speaker verification systems against playback attacks. To detect playback attacks, the PAD uses a feature set called a peakmap, which includes frame and FFT bin numbers of the five highest spectral peaks from each of the voiced frames in an utterance. During the detection, the peakmap of an incoming recording is first extracted and then compared to those of all the other recordings that are stored at the system end. Each comparison will yield a similarity score that represents the level of similarity between the two recordings. The incoming recording is declared to be a playback recording if its maximum similarity score is above a threshold.

A US patent application US2010131279 discloses a method for controlling user access to a service available in a data network and/or to information stored in a user database, in order to protect stored user data from unauthorized access, wherein the method comprises the following steps: input of a user's speech sample to a user data terminal, processing of the user's speech sample in order to obtain a prepared speech sample as well as a current voice profile of the user, comparison of the current voice profile with an initial voice profile stored in an authorization database, and output of an access-control signal to either permit or refuse access, taking into account the result of the comparison step, such that the comparison step includes a quantitative similarity evaluation of the current and the stored voice profiles as well as a threshold-value discrimination of a similarity measure thereby derived, and an access-control signal that initiates permission of access is generated only if a prespecified similarity measure is not exceeded.

A US patent application US2013006626 discloses a system, which includes a login process controller; a speech recognition module; a speaker verification module; a speech synthesis module; and a user database. Responsive to a user-provided first verbal answer to a first verbal question, the first verbal answer is converted to text and compared with data previously stored in the user database. The speech synthesis module provides a second question to the user, and responsive to a user-provided second verbal answer to the second question, the speaker verification module compares the second verbal answer with a voice print of the user previously stored in the user database and validates that the second verbal answer matches a voice print of the user previously stored in the user database. There is also disclosed a method of logging in to the telecommunications system and a computer program product for logging in to the telecommunications system.

It would be advantageous to improve the security of text-dependent, biometric speaker verification systems against playback attacks. It would be also advantageous to provide an improved and resource-effective system and method for detecting recorded biometric information.

SUMMARY

There is presented a method for detecting a recorded biometric information, the method comprising: preparing a spectrogram $S_{n,k}$ of the recorded speech biometric information, wherein the spectrogram $S_{n,k}$ is an N x K matrix, where $S_{n,k}$ is a log-amplitude of the spectrogram at a given time frame n and frequency bin k; wherein the method further comprises the steps of: normalizing the spectrogram by its mean spectral value; subjecting the spectrogram to high-pass digital filtering; extracting a local maxima pair; and calculating a similarity by comparing the output of the local maxima pair extraction with a previously stored data.

Preferably, step of preparing a spectrogram includes Hamming windowing, wherein the windows overlap.

Preferably, the Hamming window is from 20 ms to 100 ms and the overlap is from 25% to 75%.

Preferably, the step of normalizing the spectrogram comprises calculating a normalized spectrogram

$$S_{n,k}^{*} = S_{n,k} - \mu_S , \qquad (1)$$

wherein for n = 1, ..., N and k = 1, ..., K:

$$\mu_S = \frac{1}{N * K} \sum_{n=1}^{N} \sum_{k=1}^{K} S_{n,k} \qquad (2)$$

Preferably, the high-pass digital filter is applied to each of the K spectrogram frequency bins along N consecutive time-frames:

$$H(z) = \frac{1 - z^{-1}}{1 - \alpha z^{-1}} \qquad (3)$$

Preferably, the step of executing a local maxima pair extraction comprises the steps of: (a) for each i-th local spectral maximum, extracting its coordinates $(n_i, k_i)$ according to a differential criterion; (b) pruning the obtained set of peak coordinates $(n_i, k_i)$ in order to eliminate insignificant peaks; (c) setting all the other frequency bins to a zero-value; (d) eliminating peak candidates by masking selected candidates with the envelope en(k) obtained by a convolution of the spectral frame with a Gaussian window; (e) for each peak, inside the target region, combining this seed peak with other peaks from the target region into pairs; (f) representing the set of such pairs by a 4-column matrix, where each row corresponds to one pair of maxima for all the pairs found in the spectrogram wherein each row consists of 4 integer values: $(k_i, n_i)$ - coordinates of the seed peak; $(dk_i, dn_i)$ - frequency and time shifts between peaks paired with the seed peak; (g) sorting the matrix row-wise and removing duplicated rows as well as the first column of the matrix.

Preferably, the step of executing a similarity calculation preserves the time-ordering of the maxima pairs and each comparison results in a specific number of identical rows, wherein this number creates the hits vector U of M length, wherein M is the number of recordings of a particular speaker in a database.

Preferably, the method further comprises the step of normalizing the similarity calculation output.

Preferably, the normalization is based on $L_c$ cohort cores.

There is also presented a computer program comprising program code means for performing all the steps of the computer-implemented method as described above when said program is run on a computer, as well as a computer readable medium storing computer-executable instructions performing all the steps of the computer-implemented method as described above when executed on a computer.

There is also presented a system for detecting pre-recorded biometric information, the system comprising: a data bus communicatively coupled to a memory; a controller communicatively coupled to the data bus and configured to prepare a spectrogram $S_{n,k}$ of the recorded speech biometric information, wherein the spectrogram $S_{n,k}$ is an N x K matrix, wherein $S_{n,k}$ is a log-amplitude of the spectrogram at a given time frame n and frequency bin k; a spectrogram normalization module configured to normalize the spectrogram by its mean spectral value; a high-pass filter module configured to high-pass filter the spectrogram $S_{n,k}$; a maxima pair extraction module configured to extract a local maxima pair; the controller being further configured to calculate a similarity by comparing the output of the local maxima pair extraction with a previously stored data.

BRIEF DESCRIPTION OF FIGURES

These and other objects of the invention presented herein are accomplished by providing a system and a method for detecting recorded biometric information. Further details and features of the presented method and system, their nature and various advantages will become more apparent from the following detailed description of the preferred embodiments shown in a drawing, in which:

Fig. 1 presents a diagram of the system for detecting recorded biometric information;
Fig. 2 presents a diagram of the method for detecting recorded biometric information;
Figs. 3A-B present examples of a spectrogram with its maxima pairs plotted for a reference pattern and for a playback attack pattern.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

DETAILED DESCRIPTION

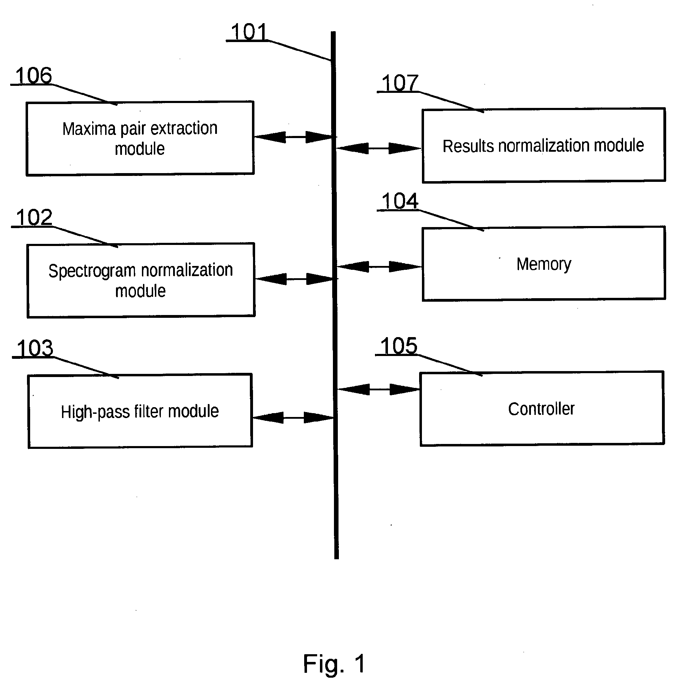

Fig. 1 presents a diagram of a system for detecting recorded biometric information. The system may be realized using dedicated components or custom made FPGA or ASIC circuits. The system comprises a data bus 101 communicatively coupled to a memory 104. In addition, other components of the system are communicatively coupled to the system bus 101, so that they may be managed by a controller 105.

The memory 104 may store a computer program or a plurality of programs to be executed by the controller 105 in order to execute steps of the method for detecting recorded biometric information. The memory may further store digital speech data to be tested against a playback attack, as well as intermediate and final processing results.

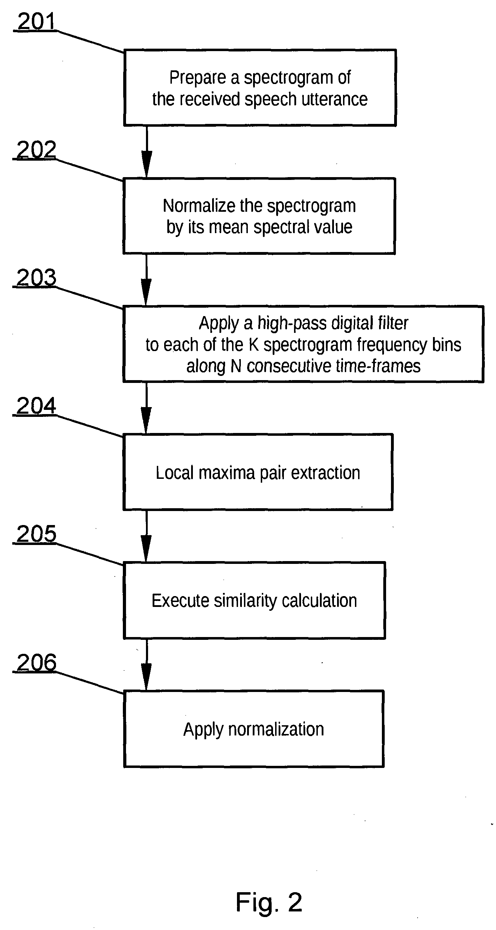

The system comprises a spectrogram normalization module 102 configured to normalize a spectrogram of the analyzed speech by its mean spectral value. This process corresponds to step 202 of the procedure shown in Fig. 2.

The system further comprises a high-pass digital filter 103 configured such that the filter is applied to each of the K spectrogram frequency bins along N consecutive time-frames. This process corresponds to step 203 of the procedure shown in Fig. 2.

The next module of the system is a maxima pair extraction module 106 configured to execute local maxima pair extraction according to step 204 of the procedure shown in Fig. 2.

The system further comprises a results normalization module 107 configured to execute similarity calculation and results normalization according to steps 205 and 206 of the procedure shown in Fig. 2.

Fig. 2 presents a diagram of a method for detecting recorded biometric information. The method starts at step 201 from preparing a spectrogram of the received speech utterance, which is a preferred form of representation of a signal that allows for features analysis. For this purpose, a window function may be applied. In signal processing, a window function (also known as an apodization function or tapering function) is a mathematical function that is zero-valued outside of a chosen interval.

Preferably, a 512-point FFT (Fast Fourier transform) with 64ms Hamming windowing and 32ms overlapping is used to obtain the spectral features of the recording. Other windowing times may be used as well, for example from 48 ms to 80 ms. The overlapping is optional and it serves to improve efficiency, other overlapping ranges are also possibile. For simpler implementations, overlapping may be avoided. These values have been determined experimentally to provide the optimal spectral resolution for the extraction of the most significant features.

The windowing need not be Hamming windowing and other approaches may be used, which does not alter the operating principle but only affects system efficiency.

Let the spectrogram S be a N x K matrix, where $S_{n,k}$ is a log-amplitude of the spectrogram at a given time frame n and frequency bin k (a bin refers to a given frequency while a window may comprise a plurality of bins).

In order to reduce border-effects introduced in the next steps of the procedure, the spectrogram is normalized by its mean spectral value at step 202.

$$S^{*}_{n,k} = S_{n,k} - \mu_S, \tag{1}$$

wherein

$$\mu_S = \frac{1}{N * K} \sum_{n=1}^{N} \sum_{k=1}^{K} S_{n,k} \tag{2}$$

for n=1,...,N and k=1,...,K.

At step 203, there is subsequently applied a high-pass digital filter to each of the K spectrogram frequency bins along N consecutive time-frames to increase the contrast of the spectrogram and to improve maxima extraction efficiency. The closer the pole is to z = 1, the less spectral maxima are found. During the performance test, the value $\alpha$ = 0.98 was found to produce the best results (nevertheless a preferred range of 0.98 to 1 may be used).

$$H(z) = \frac{1 - z^{-1}}{1 - \alpha z^{-1}} \tag{3}$$

The filtering discards slowly changing values (numerous local maxima in proximity to each other. Decrease of this parameter will affect local maxima extraction as there will be fewer of them due to smoothing of the spectrogram).

Next, at step 204, there is executed a local maxima pair extraction. The method of the local maxima pair extraction may, for example, be based on the method published in: A. L. chun Wang, An industrial-strength audio search algorithm, in: Proceedings of the 4th International Conference on Music Information Retrieval, 2003.

For each i-th local spectral maximum, its coordinates $(n_i, k_i)$ are extracted according to the following differential criterion:

$$(n_i, k_i): S_{n,k} > \max\{S_{n,k-1}, S_{n,k+1}, S_{n-1,k} + d, S_{n+1,k}\} \tag{4}$$

wherein d is a temporal peak-masking decay coefficient. The obtained set of peak coordinates $(n_i, k_i)$ is then pruned in order to eliminate insignificant peaks. That is, for each n-th frame, only the top-5 spectral maxima are left in the set.

All the other frequency bins are set to a zero-value. The resulting sparse spectrogram is then processed further, as the elimination of peak candidates is performed by way of masking selected candidates with the envelope en(k) obtained by a convolution of the spectral frame with a Gaussian window. The width of the spreading Gaussian window can be adjusted during system evaluation. Only peak candidates higher than the envelope:

wherein p = 1.1 is an overmasking factor, are eventually selected as the set of spectral maxima to be used for utterance parameterization. The value of p has been determined by experimentation.

Having the set of local maxima of the spectrogram, inside the target region $R_i$

$$\{(n_i, k_i): S_{n,k} > e_n(k)/p\}, \tag{5}$$

$$R_i(n,k) = \left\{ (n,k): \quad n_i < n < n_i + r \quad \wedge \quad k_i - p < k < k_i + p \right\} \qquad (6)$$

of each peak, this seed peak is then combined with other peaks from the target region into pairs.

Parameters r and p determine the size of the target region along the time and frequency dimension respectively. The maximum number of pairs originating from each seed peak is limited by selecting the closest peak candidates.

The set of such pairs is represented by a 4-column matrix G, wherein each row corresponds to one pair of maxima for all the pairs found in the spectrogram. Each row consists of 4 integer values: $(k_i, n_i)$ - coordinates of the seed peak; $(dk_i, dn_i)$ - frequency and time shifts between peaks paired with the seed peak. The matrix is sorted row-wise and duplicated rows are removed.

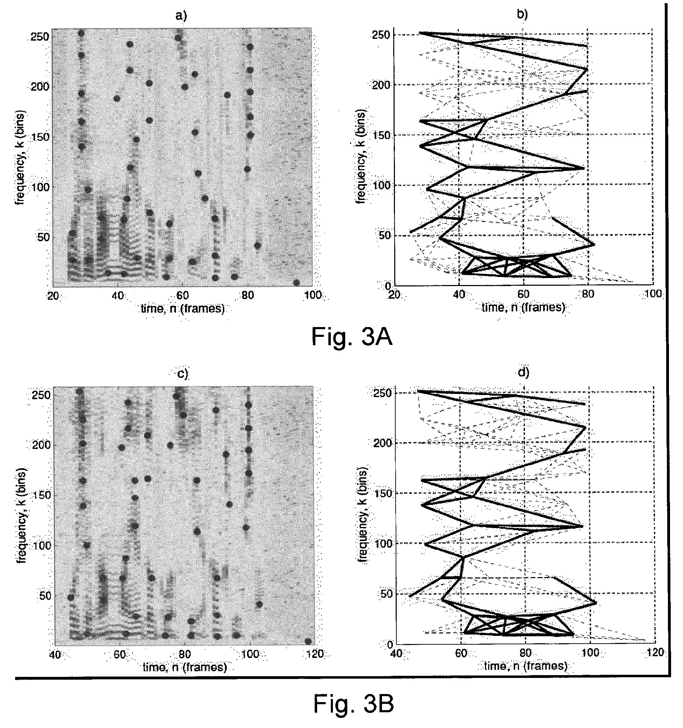

The first redundant column is removed as well. Each row of the pair-matrix G is 20 bits in size and it is called marker for further reference. The marker is a concatenation of 8 bits of $k_i$, 6 bits of $dk_i$ and 6 bits of $dn_i$. The matrix G of the original utterance is ready to be saved in the system's database and to be used in the scoring phase. An example of a spectrogram (a) with its maxima pairs plotted (b) is presented in Fig. 3A and Fig. 3B.

Figs. 3A-B present spectrograms for a referece pattern and a playback attack pattern respectively, i.e. examples of the authentic and playback utterances. There are presented spectrograms with peaks for: a) authentic utterance, c) playback utterance. There are also presented maxima pairs constellations for: b) authentic utterance, d) playback utterance. Solid lines on b), d) show similarity between authentic recording and its played-back version. The graphic shows simplified utterances' features sets to maintain the clarity of the figure. The object is to find the similarities. The similarities measured as common pairs of maxima of histograms are marked with solid lines (one line - one pair). On both recordings, the solid lines are in the same places (in contrast to dashed lines, which indicate differences).

Subsequently, at step 205, there is executed similarity calculation. In this step the pair-matrix $G_{test}$ of the tested utterance is compared with all the pair-matrices of a particular target, stored during previous verification attempts (or during the step of setting up a biometric speaker verification access to a given system).

The comparison is conducted in a way to preserve the time-ordering of the maxima pairs. Each comparison results in a specific number of identical rows. This number creates the hits vector U having the length of M, wherein M is the number of recordings of a particular speaker in a database. In order to compute the similarity of a test recording to reference patterns, an L coefficient may be computed. Each L(i) is a ratio of a count of the same markers in the test recording and a reference recording (i) to a count of all markers in the reference recording (I).

Therefore, each L(i) is a set of baseline system scores. The ratio of each element of U to the number of rows of its corresponding reference G is calculated, wherein Yi is the number of rows in G. For example, if a comparison is made between the tested utterance's pair-matrix $G_{test}$ with the reference pair-matrix $G_A$ of the recording A from the speaker's database, the ratio of the number of obtained identical rows to the number of all rows $G_A$ is calculated. The PAD algorithm returns the value $L_{max}$, which is the maximum score of the baseline detection scores vector L. The obtained value is then used as a baseline similarity

$$L(i) = \frac{U(i)}{Y_i}, \qquad (7)$$

score to test the playback attack hypothesis. The baseline similarity score is meant as the raw score without normalization.

In order to gain accuracy and robustness, system normalization techniques are used at step 206. The main goal of detection score normalization is to increase the system's accuracy by making the scoring space independent from the varying testing, training, and other operational conditions. Applying score normalization in the PAD algorithm is used to improve its robustness and accuracy as well.

Let $L_c$ be a so-called cohort-score vector of baseline detection scores L, wherein the maximum score $L_{max}$ is excluded from the original score set. Normalization approaches based on $L_c$ cohort cores may for example utilize techniques disclosed in: Y. Zigel, A. Cohen, On cohort selection for speaker verification., in: INTERSPEECH, ISCA, 2003 (URL http://dblp.unitrier.de/db/conf/interspeech/interspeech2003.html).

There may be applied different methods of cohort-based score normalization, such as:

$$L_{Cnorm} = \frac{L_{max}}{\max(L_C)}, \qquad (8)$$

$$L_{Cnorm_2} = L_{max} - \mu_{L_C},\qquad(9)$$

$$L_{Cnorm_3} = \frac{L_{max}}{\mu_{L_C}},\qquad(10)$$

In the case of cohort normalization, to normalize scores using T-normalization (C. Barras, J. Gauvain, Feature and score normalization for speaker verification of cellular data, in: Acoustics, Speech, and Signal Processing, 2003. Proceedings. (ICASSP '03). 2003 IEEE International Conference on, Vol. 2, 2003, pp. II-49-52 vol.2. doi:10.1109/ICASSP.2003.1202291) there may be used a cohort of LC scores. The size of the $L_c$ cohort is limited to 30, the closest to the $L_{max}$ value, elements only. T-normalization is performed using the mean #T and standard deviation σT parameters of the $L_{c'}$ cohort:

$$L_{Tnorm}(i) = \frac{L(i) - \mu_T}{\sigma_T + \epsilon}\qquad(11)$$

where ε = 0.00431 when σ = 0 is used as a backup (precalculated off-line from test where σ ≠ 0) and ε = 0 otherwise.

Another method of score normalization is Z-normalization (R. Auckenthaler, Score Normalization for Text-Independent Speaker Verification Systems, Digital Signal Processing 10 (1-3) (2000) 42-54. doi:10.1006/dspr.1999.0360), where the mean $\mu_z$ and the standard deviation $\sigma_z$ parameters, calculated for each of the speaker's reference recordings, are obtained by scoring the recording against a set of randomly chosen reference recordings of other speakers:

The main advantage of the Z-norm is that the parameters $\mu_z$ and $\sigma_z$ can be pre-calculated offine.

$$L_{Znorm}(i) = \frac{L(i) - \mu_Z}{\sigma_Z + \epsilon},\qquad(12)$$

Combinations of different normalization methods, such as ZT-norm (first a normalization using T-norm, next using Z-norm), TZ-norm and the normalization described by the formula which combines the properties of T- and Z-normalization simultaneously, may also be applied.

$$L_{Xnorm}(i) = \frac{L(i) - \frac{\mu_T + \mu_Z}{2}}{\frac{1}{4}\sqrt{\sigma_T^2 + \sigma_Z^2}},\qquad(13)$$

As it turns out from comparison of the test results of the presented PAD system and the expectations of the market, it is possible to use the presented solution in real-world applications. This method, due to spectral-pairs-based detection, can be used to detect artificially prepared (tailored) playback utterances as well, with the help of concatenation or other, more advanced speech modification methods.

The presented method and system allow for biometric speaker verification and prevention of playback attack, which is very useful in authorization systems. Therefore, the presented method and system provide a useful, concrete and tangible result.

Due to the fact that speech data are processed and transformed in order to execute biometric speaker verification and prevention of playback attack and to the fact that data processing takes place in a dedicated, programmed machine, the machine or transformation test is fulfilled and the idea is not abstract.

It can be easily recognized, by one skilled in the art, that the aforementioned method for detecting recorded biometric information may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the method and system presented herein has been depicted, described, and has been defined with reference to particular preferred embodiments, such references and examples of implementation in the foregoing specification do not imply any limitation on the presented method or system. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A method for detecting a recorded biometric information, the method comprising:

   - preparing (201) a spectrogram $S_{n,k}$ of the recorded speech biometric information, wherein the spectrogram $S_{n,k}$ is an N x K matrix, where $S_{n,k}$ is a log-amplitude of the spectrogram at a given time frame n and frequency bin k;

   the method being **characterized in that** it further comprises the steps of:

   - normalizing (202) the spectrogram by its mean spectral value;
   - subjecting (203) the spectrogram to high-pass digital filtering;
   - extracting (204) a local maxima pair; and
   - calculating (205) a similarity by comparing the output of the local maxima pair extraction with a previously stored data.

2. The method according to claim 1 wherein the step of preparing a spectrogram includes Hamming windowing, wherein the windows overlap.

3. The method according to claim 2 wherein the Hamming window is from 20 ms to 100 ms and the overlap is from 25% to 75%.

4. The method according to claim 1 wherein the step of normalizing the spectrogram comprises calculating a normalized spectrogram

$$S^{*}_{n,k} = S_{n,k} - \mu_S, \tag{1}$$

   wherein for n = 1, ..., N and k = 1, ..., K:

$$\mu_S = \frac{1}{N * K} \sum_{n=1}^{N} \sum_{k=1}^{K} S_{n,k} \tag{2}$$

5. The method according to claim 4, wherein the high-pass digital filter is applied to each of the K spectrogram frequency bins along N consecutive time-frames:

$$H(z) = \frac{1 - z^{-1}}{1 - \alpha z^{-1}} \tag{3}$$

6. The method according to claim 1 wherein the step of executing a local maxima pair extraction comprises the steps of:

(a) for each i-th local spectral maximum, extracting its coordinates $(n_i, k_i)$ according to a differential criterion;

(b) pruning the obtained set of peak coordinates $(n_i, k_i)$ in order to eliminate insignificant peaks;

(c) setting all the other frequency bins to a zero-value;

(d) eliminating peak candidates by masking selected candidates with the envelope en(k) obtained by a convolution of the spectral frame with a Gaussian window;

(e) for each peak, inside the target region, combining this seed peak with other peaks from the target region into pairs;

(f) representing the set of such pairs by a 4-column matrix, where each row corresponds to one pair of maxima for all the pairs found in the spectrogram wherein each row consists of 4 integer values: $(k_i, n_i)$ - coordinates of the seed peak; $(dk_i, dn_i)$ - frequency and time shifts between peaks paired with the seed peak; and

(g) sorting the matrix row-wise and removing duplicated rows as well as the first column of the matrix.

7. The method according to claim 1, wherein the step of executing a similarity calculation preserves the time-ordering of the maxima pairs and each comparison results in a specific number of identical rows, wherein this number creates the hits vector U of M length, wherein M is the number of recordings of a particular speaker in a database.

8. The method according to claim 1, further comprising the step of normalizing (206) the similarity calculation (205) output.

9. The method according to claim 8, wherein the normalization is based on $L_c$ cohort cores.

10. A computer program comprising program code means for performing all the steps of the computer-implemented method according to any of claims 1-9 when said program is run on a computer.

11. A computer readable medium storing computer-executable instructions performing all the steps of the computer-implemented method according to any of claims 1-9 when executed on a computer.

12. A system for detecting pre-recorded biometric information, the system comprising:

- a data bus (101) communicatively coupled to a memory (104);
- a controller (105) communicatively coupled to the data bus (101) and configured to prepare a spectrogram $S_{n,k}$ of the recorded speech biometric information, wherein the spectrogram $S_{n,k}$ is an N x K matrix, wherein $S_{n,k}$ is a log-amplitude of the spectrogram at a given time frame n and frequency bin k;
- a spectrogram normalization module (102) configured to normalize the spectrogram by its mean spectral value;
- a high-pass filter module (103) configured to high-pass filter the spectrogram $S_{n,k}$;
- a maxima pair extraction module (106) configured to extract a local maxima pair;
- the controller (105) being further configured to calculate a similarity by comparing the output of the local maxima pair extraction with a previously stored data.

**Patentansprüche**

1. Verfahren zum Detektieren einer aufgezeichneten biometrischen Information, wobei das Verfahren Folgendes umfasst:

- das Herstellen (201) eines Spektrogramms $S_{n,k}$ der aufgezeichneten biometrischen Sprachinformation, wobei das Spektrogramm $S_{n,k}$ eine N x K-Matrix ist, wobei $S_{n,k}$ eine Log-Amplitude des Spektrogramms bei einem gegeben Zeitrahmen n und Frequenz-Bin k ist;

wobei das Verfahren **dadurch gekennzeichnet ist, dass** es weiter die folgenden Schritte umfasst:

- Normalisieren (202) des Spektrogramms um seinen mittleren Spektralwert;
- das Spektrogramm digitalem Hochpassfiltern aussetzen (203);
- Extrahieren (204) eines lokalen Maximapaares; und
- Berechnen (205) einer Ähnlichkeit durch das Vergleichen der Ausgabe der Extraktion des lokalen Maximapaares mit zuvor gespeicherten Daten.

2. Verfahren nach Anspruch 1, wobei der Schritt des Herstellens eines Spektrogramms das Anwenden eines Hamming-Fensters umfasst, wobei sich die Fenster überlappen.

3. Verfahren nach Anspruch 2, wobei das Hamming-Fenster zwischen 20 ms und 100 ms liegt und die Überlappung zwischen 25 % und 75 % beträgt.

4. Verfahren nach Anspruch 1, wobei der Schritt des Normalisierens des Spektrogramms das Berechnen eines normalisierten Spektrogramms umfasst,

$$S_{n,k}^{*} = S_{n,k} - \mu_{S}, \qquad (1)$$

wobei für n = 1, ..., N und k = 1, ..., K:

$$\mu_{S} = \frac{1}{N * K} \sum_{n=1}^{N} \sum_{k=1}^{K} S_{n,k} \qquad (2)$$

5. Verfahren nach Anspruch 4, wobei der digitale Hochpassfilter auf jede der K-Spektrogramm-Frequenz-Bins entlang N aufeinanderfolgenden Zeitrahmen angewendet wird:

$$H(z) = \frac{1 - z^{-1}}{1 - \alpha z^{-1}} \qquad (3)$$

6. Verfahren nach Anspruch 1, wobei der Schritt des Durchführens einer lokalen Extraktion des lokalen Maximapaares die folgenden Schritte umfasst:

 a) für jedes i-te lokale spektrale Maximum, Extrahieren seiner Koordinaten $(n_i, k_i)$ gemäß einem Differenzialkriterium;
 b) Beschneiden des gewonnenen Satzes von Spitzenwert-Koordinaten $(n_i, k_i)$, um nicht signifikante Spitzenwerte zu eliminieren;
 c) Festsetzen aller anderen Frequenz-Bins auf einen Nullwert;
 d) Eliminieren von Spitzenwert-Kandidaten durch das Maskieren von ausgewählten Kandidaten mit der Hülle en(k), die durch eine Faltung des Spektralrahmens mit einem Gauß-Fenster gewonnen wird;
 e) für jeden Spitzenwert innerhalb der Zielregion, Kombinieren des Start-Spitzenwerts mit anderen Spitzenwerten in der Zielregion in Paare;
 a) Repräsentieren des Satzes dieser Paare durch eine 4-Spalten-Matrix, wobei jede Reihe einem Paar von Maxima für alle in dem Spektrogramm gefundenen Paare entspricht, wobei jede Reihe aus 4 ganzen Werten besteht: $(k_i, n_i)$-Koordinaten des Start-Spitzenwerts; $(dk_i, dn_i)$-Frequenz- und Zeitverlagerungen zwischen mit dem Start-Spitzenwert gepaarten Spitzenwerten; und
 (g) reihenweises Sortieren der Matrix und Entfernen von duplizierten Reihen sowie der ersten Spalte der Matrix.

7. Verfahren nach Anspruch 1, wobei der Schritt des Ausführens einer Ähnlichkeitsberechnung die zeitliche Ordnung der Maximapaare beibehält und jeder Vergleich zu einer spezifischen Anzahl von identischen Reihen führt, wobei diese Anzahl den Treffervektor U von M Längen schafft, wobei M die Anzahl der Aufzeichnungen eines bestimmten Sprechers in einer Datenbank ist.

8. Verfahren nach Anspruch 1, weiter umfassend den Schritt des Normalisierens (206) der Ausgabe der Ähnlichkeitsberechnung (205).

9. Verfahren nach Anspruch 8, wobei die Normalisierung auf $L_c$ Kohortenkernen basiert.

10. Computerprogramm, Programmcodemittel zum Ausführen aller Schrittes des computerimplementierten Verfahrens nach einem der Ansprüche 1-9 umfassend, wenn das Programm auf einem Computer läuft.

**11.** Computerlesbares Medium, das computerausführbare Anweisungen umfasst, die alle Schritte des computerimplementierten Verfahrens gemäß einem der Ansprüche 1-9 ausführen, wenn sie auf einem Computer ausgeführt werden.

**12.** System zum Detektieren einer zuvor aufgezeichneten biometrischen Information, wobei das System Folgendes umfasst:

- einen Datenbus (101), der kommunikativ mit einem Speicher (104) gekoppelt ist;
- eine Steuerung (105), die kommunikativ mit dem Datenbus (101) gekoppelt und dafür konfiguriert ist, ein Spektrogramm $S_{n,k}$ der aufgezeichneten biometrischen Sprachinformation herzustellen, wobei das Spektrogramm $S_{n,k}$ eine N x K-Matrix ist, wobei $S_{n,k}$ eine Log-Amplitude des Spektrogramms bei einem gegeben Zeitrahmen n und Frequenz-Bin k ist;
- ein Spektrogramm-Normalisierungs-Modul (102), das dafür konfiguriert ist, das Spektrogramm durch seinen gemittelten Spektralwert zu normalisieren;
- ein Hochpass-Filtermodul (103), das dafür konfiguriert ist, das Spektrogramm $S_{n,k}$ hochpasszufiltern;
- ein Maximapaar-Extraktionsmodul (106), das dafür konfiguriert ist, ein lokales Maximapaar zu extrahieren;
- wobei die Steuerung (105) weiter dafür konfiguriert ist, durch das Vergleichen der Ausgabe der Extraktion des lokalen Maximapaares eine Ähnlichkeit mit zuvor gespeicherten Daten zu berechnen.

**Revendications**

**1.** Procédé permettant de détecter une information biométrique enregistrée, le procédé comprenant :

- la préparation (201) d'un spectrogramme $S_{n,k}$ des informations biométriques de voix enregistrées, ledit spectrogramme $S_{n,k}$ étant une matrice N x K, où $S_{n,k}$ est une amplitude logarithmique du spectrogramme à une période n et un canal de fréquence k donnés ;

le procédé étant **caractérisé en ce qu'**il comprend en outre les étapes de :

- normalisation (202) du spectrogramme par sa valeur spectrale moyenne ;
- soumission (203) du spectrogramme à un filtrage numérique passe-haut ;
- extraction (204) d'une paire de maxima locaux ; et
- calcul (205) d'une similitude en comparant le résultat de l'extraction de la paire de maxima locaux à une donnée précédemment stockée.

**2.** Procédé selon la revendication 1, ladite étape de préparation d'un spectrogramme comprenant un fenêtrage de Hamming dans lequel les fenêtres se chevauchent.

**3.** Procédé selon la revendication 2, ladite fenêtre de Hamming représentant de 20 ms à 100 ms et le chevauchement représentant de 25 % à 75 %.

**4.** Procédé selon la revendication 1, ladite étape de normalisation du spectrogramme comprenant le calcul d'un spectrogramme normalisé

$$S_{n,k}^{*} = S_{n,k} - \mu_S, \qquad (1)$$

dans lequel pour n = 1, ..., N et k = 1, ..., K :

$$\mu_S = \frac{1}{N*K} \sum_{n=1}^{N} \sum_{k=1}^{K} S_{n,k} \qquad (2)$$

**5.** Procédé selon la revendication 4, ledit filtre numérique passe-haut étant appliqué à chacun des K canaux de fréquences du spectrogramme selon N périodes consécutives :

$$H(z) = \frac{1 - z^{-1}}{1 - \alpha z^{-1}} \tag{3}$$

6. Procédé selon la revendication 1, ladite étape d'exécution d'une extraction de paire de maxima locaux comprenant les étapes de :

(a) pour chaque i-ième maximum spectral local, extraction de ses coordonnées $(n_i, k_i)$ selon un critère différentiel ;
(b) élagage de l'ensemble des coordonnées $(n_i, k_i)$ de pics obtenu afin d'éliminer les pics insignifiants ;
(c) réglage de tous les autres canaux de fréquences à une valeur nulle ;
(d) élimination des pics candidats en masquant les candidats choisis avec l'enveloppe en(k) obtenue par convolution de la trame spectrale avec une fenêtre gaussienne ;
(e) pour chaque pic, à l'intérieur de la région cible, combinaison de ce pic initial avec d'autres pics de la région cible en paires ;
(f) représentation de l'ensemble de telles paires par une matrice à 4 colonnes, où chaque ligne correspond à une paire de maxima pour toutes les paires se trouvant dans le spectrogramme, chaque ligne se composant de 4 valeurs entières : $(k_i, n_i)$ - coordonnées du pic initial ; $(dk_i, dn_i)$ - décalages de fréquence et temps entre les pics appariés au pic initial ; et
(g) classification de la matrice ligne par ligne et suppression des lignes dupliquées ainsi que de la première colonne de la matrice.

7. Procédé selon la revendication 1, ladite étape d'exécution d'un calcul de similitude conservant l'ordre chronologique des paires de maxima et chaque comparaison conduisant à un nombre spécifique de lignes identiques, ce nombre créant le vecteur de résultats pertinents U de longueur M, M représentant le nombre d'enregistrements d'un locuteur particulier dans une base de données.

8. Procédé selon la revendication 1 comprenant en outre l'étape de normalisation (206) du résultat du calcul de similitude (205).

9. Procédé selon la revendication 8, la normalisation se basant sur des coeurs de cohortes $L_c$.

10. Programme informatique comprenant des moyens de code de programme permettant d'effectuer toutes les étapes du procédé mis en oeuvre par ordinateur selon l'une quelconque des revendications 1 à 9 lorsque ledit programme est exécuté sur un ordinateur.

11. Support lisible par ordinateur stockant des informations exécutables par ordinateur effectuant toutes les étapes du procédé mis en oeuvre par ordinateur selon l'une quelconque des revendications 1 à 9 lorsqu'il est exécuté sur un ordinateur.

12. Système permettant de détecter des informations biométriques préenregistrées, le système comprenant :

- un bus de données (101) couplé de manière communicative à une mémoire (104) ;
- un contrôleur (105) couplé de manière communicative au bus de données (101) et configuré pour préparer un spectrogramme $S_{n,k}$ des informations biométriques de voix enregistrées, ledit spectrogramme $S_{n,k}$ étant une matrice N x K, $S_{n,k}$ étant une amplitude logarithmique du spectrogramme à une période n et un canal de fréquence k donnés ;
- un module de normalisation de spectrogramme (102) configuré pour normaliser le spectrogramme par sa valeur spectrale moyenne ;
- un module de filtre passe-haut (103) configuré pour effectuer un filtrage passe-haut du spectrogramme $S_{n,k}$ ;
- un module d'extraction de paire de maxima (106) configuré pour extraire une paire de maxima locaux ;
- le contrôleur (105) étant en outre configuré pour calculer une similitude en comparant le résultat de l'extraction de la paire de maxima locaux à une donnée précédemment stockée.

Fig. 1

201

Prepare a spectrogram of
the received speech utterance

202

Normalize the spectrogram
by its mean spectral value

203

Apply a high-pass digital filter
to each of the K spectrogram frequency bins
along N consecutive time-frames

204

Local maxima pair extraction

205

Execute similarity calculation

206

Apply normalization

Fig. 2

14

Fig. 3A

Fig. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010131279 A

- US 2013006626 A

**Non-patent literature cited in the description**

- **WEI SHANG ; MARYHELEN STEVENSON.** A Playback Attack Detector for Speaker Verification Systems. *ISCCSP 2008, Malta, 12-14 March 2008*
- **A. L. CHUN WANG.** An industrial-strength audio search algorithm. *Proceedings of the 4th International Conference on Music Information Retrieval,* 2003
- **Y. ZIGEL ; A. COHEN.** On cohort selection for speaker verification. *INTERSPEECH, ISCA,* 2003, http://dblp.unitrier.de/db/conf/interspeech/interspeech2003.html

- **C. BARRAS ; J. GAUVAIN.** Feature and score normalization for speaker verification of cellular data. *Acoustics, Speech, and Signal Processing, 2003. Proceedings. (ICASSP '03). 2003 IEEE International Conference on,* 2003, vol. 2, II-49-52
- **R. AUCKENTHALER.** Score Normalization for Text-Independent Speaker Verification Systems. *Digital Signal Processing,* 2000, vol. 10 (1-3), 42-54